Europäisches Patentamt

**European Patent Office**

**Office européen des brevets**

(19)

(11) Publication number: **0 063 954**
**A1**

(12) # EUROPEAN PATENT APPLICATION

(21) Application number: **82302158.9**

(22) Date of filing: **27.04.82**

(51) Int. Cl.³: **G 02 B 7/26**

(30) Priority: **27.04.81 US 258079**

(43) Date of publication of application: **03.11.82**
Bulletin 82/44

(84) Designated Contracting States: **AT BE CH DE FR GB IT LI LU NL SE**

(71) Applicant: **RAYCHEM CORPORATION, 300 Constitution Drive, Menlo Park California 94025 (US)**

(72) Inventor: **Campbell, Bruce Donald, 221 Vista Verde Way, Portola Valley California, 94025 (US)**
Inventor: **Triplett, James Thomas, 2801 Superior Drive, Livermore California,94050 (US)**
Inventor: **Tylor, Richard Edward, 3296 Trafalgar Road, Fremont California, 94536 (US)**

(74) Representative: **Dlugosz, Anthony Charles et al, Raychem Limited Patent & Legal Department Faraday Road Dorcan, Swindon SN3 5HH Wiltshire (GB)**

(54) **Methods, apparatus and articles for optical fiber systems.**

(57) This invention relates to methods, apparatus and articles for systems comprising optical fibers, in particular for feeding an optical signal into an optical fiber (30) through the buffer thereof and for withdrawing an optical signal from an optical fiber (42) through the buffer thereof. Preferably this is achieved with the aid of an optical coupling means (28, 34) which contacts and conforms to the surface of the buffer at a bent portion of the fiber (30, 42). The coupling means (28, 34) can for example be a polysiloxane. In a preferred aspect, the invention provides an apparatus and method for axially aligning the ends of optical fibers (32, 40). The apparatus comprises means (10, 12) for holding two fibers (30, 42) so that the fiber ends (32, 40) are approximately abutting and axially aligned, adjacent means for passing an optical signal into one of the fibers (30) through the buffer thereof, and adjacent means for withdrawing that signal from the other fiber (42) through the buffer thereof.

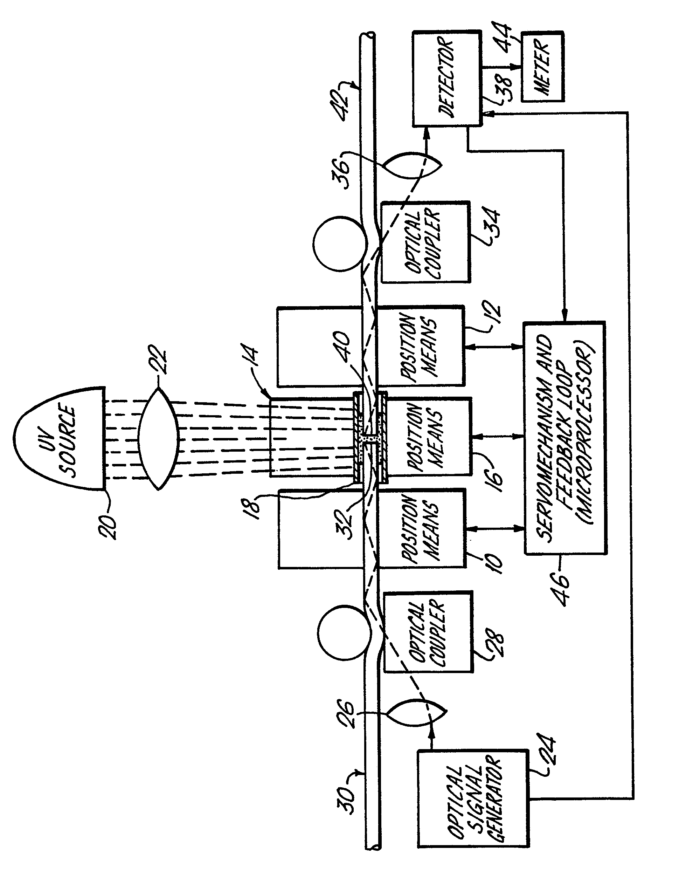

At least one of the holding means (10, 12) is movable to maximize the withdrawn optical signal and thus to align the fibers (30, 42). Preferably the apparatus comprises means for joining the ends of the aligned fibers (32, 40). The invention also includes novel splices which can be made in this way and novel splicing aids for use in the method. Suitable apparatus is illustrated in the drawing.

This invention relates to methods and apparatus for feeding an optical signal into an optical fiber through the buffer thereof and for withdrawing an optical signal from an optical fiber through the buffer thereof.

The most widely used optical fibers comprise a glass core, a glass cladding which surrounds the core and a buffer which surrounds the cladding and is composed of relatively soft polymeric material. Where reference is made in this specification to an "optical fiber" or an "optical fiber as defined", it is to be understood that the fiber referred to is one comprising a glass core, a glass cladding and a buffer. The buffer protects the cladding and the core and allows the fiber to be bent into (and maintained in) a bend of substantially smaller bend radius than would otherwise be possible. The buffer may be surrounded by a jacket. Optical signals are conventionally fed into optical fibers by directing them axially at the exposed fiber end. It has also been proposed to feed an optical signal into a fiber through the side of the cladding, after removal of any buffer in the path of the signal.

We have now surprisingly discovered that it is possible to introduce an optical signal into an optical fiber as defined through the buffer of the fiber, and also that it is possible to withdraw an optical signal from an optical fiber as defined through the buffer of the fiber and to detect the withdrawn signal. These discoveries can be utilized in a number of methods and apparatus. One particularly valuable use of these discoveries is in bringing two optical fibers into axial alignment and, preferably, joining the aligned fibers together.

It is often desirable to bring two optical fibers into precise axial alignment, so that a signal can be passed from one fiber to the other with minimum loss. Often the aligned fibers will then be joined together. The joint can be a permanent joint (usually called a "splice") made by joining the fibers directly to each other, either by fusing the fibers together or by adhering them to each other with an index-matching adhesive (i.e. an adhesive whose refractive index is chosen so that signal loss is minimized). Alternatively the joint can be a disconnectable one made by mounting the fiber ends in two mating parts of a connector and then joining the two mating parts together in such a way as to ensure alignment of the fibers.

The known methods for aligning optical fibers as defined suffer from serious disadvantages. Most of the known methods align the exteriors of the two fibers, not their cores (whose alignment is of course the dominant factor in determining the signal loss at the joint). This type of process is very much dependent on operator skills and in any case is likely to lead to poor results because the core is often not precisely in the center of the fiber. It has also been proposed to join the ends of two optical fibers by bringing the ends into approximately aligned and abutting relationship, feeding an optical signal into the remote end of one fiber, detecting the optical signal at the remote end of the other fiber, and moving the to-be-joined ends so as to maximise the detected signal, thus precisely aligning the cores in those ends. This method is capable of yielding excellent results, but is wholly impractical because of the need to establish communication links between the alignment point and the remote ends of the fibers. U.S. Patent No. 4,215,937 proposes a method in which an optical fiber is centered in one
part of a connector, by an optical method which makes
use of an optical signal which is introduced into the
fiber through the cladding, without passing through a
buffer.

   In one aspect, the invention provides a method
of axially aligning the ends of first and second
optical fibers as defined, which method comprises
positioning the ends of the fibers in approximately
abutting and axially aligned relationship; directing an
optical signal against the buffer of the first fiber at
a location near the end to be aligned so that the
signal passes through the buffer towards the end to be
aligned; withdrawing the optical signal from the second
fiber through the buffer thereof at a location near the
end to be aligned; detecting the intensity of the
withdrawn signal; and moving at least one of the fibers
to maximize the intensity of the withdrawn optical
signal  Preferably the aligned fibers are then joined
together.  Through use of the invention excellent
splices can be quickly and conveniently made, with
losses of substantially less than 0.3 dB/joint being
readily and repeatably obtainable.   .

   The preferred technique for joining the aligned
fibers is by supplying a hardenable, fluid, index-
matching adhesive to the ends of the aligned fibers.
Preferably the adhesive is polymerisable (this term
being used to include adhesives which are already
polymers but which can be further polymerised or
cross-linked).  The adhesive may be self-setting (e.g.
a two-component epoxy or cyanoacrylate adhesive) but is preferably one which polymerises only when exposed to selected treatment after the fibers have been aligned.  Particularly useful are photo-polymerisable adhesives which can be cured by exposure to UV light, for example a photo-initiated urethane/acrylate adhesive.  Other hardenable adhesives can be used, including thermoplastic materials, for example butyrate resins.  However, thermoplastic materials must be maintained at an elevated temperature until the fibers have been aligned.  The hardened adhesive will usually have a refractive index of at least 1.4, preferably at least 1.5, and will be transparent to radiation of at least one of the frequencies used as a signal in optical fibers (typically 840-860, 1280-1320 and 1450-1550 nanometers).

The improved alignment method of the present invention makes possible a new and improved technique for delivering an index-matching adhesive to the fibers.  This technique makes use of a new splicing aid which forms part of the invention.  Thus the invention provides, in another aspect, an article which is suitable for use in splicing two optical fibers and which comprises (1) a generally tubular straight container which has two open ends and whose smallest internal cross-sectional dimension is at least 300 microns, and (2) a mass of hardenable adhesive which is contained within the container, which is the only material within the container, which is retained in the container by surface tension forces when the tube is maintained in a horizontal position at the splicing temperature, preferably at 23°C, and which, when hardened, is transparent to radiation of at least one of the frequencies used as a signal in optical fibers.

The container is preferably a tube having an annular cross-section, but it can also be a tube having a different closed cross-section, or an open trough or another form of container which will contain and retain the adhesive; all such containers are included by the term "generally tubular container" as used herein. The container can if desired be fitted with removable end caps which seal the open ends of the container, thus keeping the adhesive clean and, if necessary, preventing it from leaking out of the container.

When using this new splicing aid, the fibers are pushed into the adhesive within the container and are then aligned within the container. The container may be composed of, for example, quartz glass, metal or a polymeric composition, provided that it permits (and is not damaged by) the desired process for hardening the adhesive. An advantage of this technique is that fluid flow of the adhesive about the fibers as they are inserted into the adhesive helps to ensure that the fiber ends are free of foreign mattter. Another advantage is that it is not necessary to strip the buffer from the fiber end (though this can be done if desired).

The internal dimensions of the container should be such as to allow adequate movement of the fibers during the alignment process. The fiber buffers preferably lie within the mass of adhesive, and therefore the smallest internal cross-sectional dimension of the container is preferably at least 1.6 times, especially 3 to 6 times, the external diameter of the buffer of the fiber. The larger the smallest internal cross-sectional dimension, the wider the range of fiber sizes for which a particular container will be suitable, but the greater the difficulty of retaining a polymerizable adhesive within the container.  In view of these
considerations, the smallest internal cross-sectional
dimension is preferably at least 400 microns, particularly
at least 750 microns, especially at least about 1000
microns, but preferably less than 3000 microns, especially
less than 1500 microns, e.g. 750 to 1500 microns.  When
the container has an annular cross-section, the smallest
internal cross-sectional dimension is of course the
internal diameter of the container.  The hardenable
adhesive used in the novel splicing aid preferably has
a viscosity such that it is retained in the container
at 23°C with the container horizontal, and more preferably
under all other conditions likely to be encountered
before the adhesive is hardened.  On the other hand,
its viscosity should not such that it is difficult to
insert and move the optical fibers under the splicing
conditions.  We prefer to use an adhesive having a
viscosity of 750 to 2500 centipoise, particularly
1200 to 2000 centipoise, e.g. about 1600 centipoise
(viscosities referrred to herein are measured at 23°C
using a Model HBT Brookfield Viscometer, Spindle No.
SC4-27 rotating at 100 rpm).

Through use of the new splicing aid, splices
which are novel per se can be prepared. Thus the
invention provides, in another aspect, a splice between
two axially aligned optical fibers as defined, the
fibers being joined together by a mass of an index-matching
adhesive, the adhesive being contained with a generally
tubular straight container whose smallest internal
cross-sectional dimension is at least 300 microns and
which does not contact the fibers at any point.

Another technique for joining the aligned fibers
is by fusing together the ends of the fibers.  Known
techniques e.g. use of an electric arc, are suitable
for this purpose.  However, these techniques require a
high degree of operator skill and require the buffer to
be stripped from the fibers.

After splicing the optical fibers together,
the splice can if desired be protected by shrinking a
heat-shrinkable polymeric sleeve over the splice.

Another technique for joining the aligned fibers is
to mount the fibers in mating parts of an optical fiber
connector, and to secure the connector parts to each
other.  In this technique the fibers may be connected
to each other through an intermediate body.  Preferably
the mating parts are adjustably secured to each other
and are adjusted to maximize the intensity of the
withdrawn signal.  After the adjustment is complete,
the parts are fixed in the desired position.

In another aspect, the invention provides apparatus which is suitable for carrying out the alignment
method described above and which comprises

(1)  first holding means for holding a first
     fiber as defined near the end thereof;
(2)  means for generating an optical signal and
     for directing the signal against the buffer
     of a first fiber held in the first holding
     means so that the signal passes through the
     buffer of the first fiber towards the end of
     the fiber;
(3)  second holding means for holding a second
     fiber as defined near the end thereof, in a
     position in which the end of the second fiber is approximately abutting and axially aligned
with the end of a first fiber held by the
first holding means; and

(4) means for withdrawing an optical signal from
a second fiber held in the second holding
means, the signal being withdrawn through the
buffer of the second fiber, and for detecting
the intensity of the withdrawn signal;

at least one of the first and second holding
means being movable in relation to the other so as
to maximize the optical signal detected by the
means (4) and thus to obtain precise axial alignment of the cores of the first and second fibers.

The signal-generating means in such apparatus
can be for example a laser or a light-emitting diode.
The output of the signal-generating means can if
desired be modified in response to the intensity of the
withdrawn signal so that the sensitivity of the detection
means is maintained at a predetermined (and suitably
high) level. This is desirable, for example, if the
sensitivity of the detection means decreases if the
intensity of the detected signal exceeds a particular
value.

The holding means in such apparatus can be one of
those well-known in the art, eg. a vacuum chuck or a
precision groove.

The moving of the two holding means can be effected
manually, but preferably the apparatus also comprises a
servomechanism which moves at least one of the holding
means in response to the intensity of the withdrawn
signal and thus aligns the fibers. The apparatus can
also comprise means for delivering a fluid index-matching
adhesive to the ends of the fibers, preferably means
for holding a container containing such adhesive so that the ends of the fibers can be aligned within
the adhesive.  Preferably the apparatus then also
comprises means for hardening such an adhesive, e.g. a
high intensity UV light source.  Alternatively the
apparatus can also comprise means for fusing the ends
of the fibers.

We have discovered two important means for facilitating the feeding of an optical signal into an optical
fiber as defined through the buffer thereof.  Thus we
have discovered that by directing the optical signal at
a bent portion of the optical fiber and by suitably
adjusting the directions of the signal and the fiber,
the proportion of the signal which passes through the
buffer and into the fiber can be substantially increased.
The angle between the signal and the tangent to the
fiber at the point of impact of the signal is preferably
not more than 20°, particularly not more than 10°,
especially substantially 0°.  The bend radius of the
bent portion of the fiber is preferably 3 to 15mm,
particularly 4 to 8mm.  We have also discovered that by
applying a suitable coupling means to the buffer of the
fiber (particularly a bent portion of a fiber as
described above), the proportion of the signal which
passes through the buffer and into the fiber can be
substantially increased.  The coupling member should
(a) conform to the surface of the buffer of the fiber,
(b) lie in the path of the optical signal directed at
the fiber and (c) increase the proportion of the signal
which passes through the buffer and into the fiber.
Thus we have found that the proportion of the signal
which passes through the buffer and into the fiber can
be increased substantially by placing on the buffer,
where the signal impinges on it, a block of a polysiloxane or other suitable resiliently deformable material.

-11-

A similar improvement results if the polysiloxane block is replaced by a suitable member, e.g. a finger, which has been dipped in water, isopropyl alcohol or other suitable liquid. The pressure exerted on the fiber by the coupling means is important, and excessive pressure can decrease or completely remove the desired improvement. Thus, although a degree of conformance between the coupling means and the fiber is important, too great a pressure (which may result in loss of conformance and/or distortion of the fiber) is to be avoided. The coupling means should of course be transparent to the optical signal and the refractive index thereof is preferably higher than the refractive index of the cladding of the fiber, for example preferably at least 1.3, particularly at least 1.35. It is believed that the coupling means may function as a lens to focus the optical signal in a beneficial way. Once having passed through the buffer of the fiber, the signal preferably also passes through the cladding and is propagated in the core; however the signal can also be propagated through the cladding or through the cladding and the core.

We have further discovered that the two means described above are also useful in increasing the proportion of an optical signal which can be removed from an optical fiber, through the buffer of the fiber, at a desired location. It is known that the proportion of an optical signal which is lost from an optical fiber increases as the bend radius of the fiber decreases, and this has previously been regarded as a serious disadvantage. The present invention, by contrast, can make positive and advantageous use of this fact. When a coupling means as described above is applied to a

-12-

bent portion of an optical fiber which carries an optical signal, the proportion of the signal which is removed in the region of the coupling means is substantially higher than it is at other points on the fiber having the same bend radius.

The discoveries just referred to can be put to good use in the alignment apparatus and method previously described. Thus the optical signal is preferably directed against a bent portion of the first fiber, the bent portion preferably having a bend radius of 3 to 15mm, particularly 4 to 8mm, and the angle between the signal and the tangent to the fiber at the point of signal impact being preferably not more than 20°, particularly not more than 10°, especially substantially 0°. It is also preferred that a coupling means as described above be applied to the first fiber, especially to a bent portion of the first fiber. Similarly, in order to increase the proportion of the signal which is withdrawn and detected, it is preferred that the second fiber have a bent portion therein, a tangent to the bent portion preferably passing directly into the detection means, and/or that there is applied to the second fiber a coupling means which (a) conforms to the surface of the second fiber and (b) increases the proportion of the signal which is withdrawn and detected. Generally it will be convenient for similar bends to be put into the first and second fibers and for similar coupling means to be applied thereto; however different expedients can be used for the two fibers.

However, these discoveries are not only useful in the alignment apparatus and method, but also in other apparatus and methods, for example methods for determining whether or not an optical fiber is carrying an optical signal, methods for removing a desired proportion of an optical signal from an optical fiber carrying a signal, and methods for feeding an optical signal into an optical fiber through the buffer thereof.

Thus in another aspect, the invention provides a method of detecting an optical signal in an optical fiber, which method comprises (1) applying to a bent portion of the fiber a coupling means which (a) conforms to the surface of the buffer of the fiber and (b), when an optical signal is passing through the fiber, increases the proportion of the signal which is withdrawn through the buffer of the fiber; and (2) passing any withdrawn optical signal into a detection means. The detection means can simply determine whether the intensity of any withdrawn signal exceeds a particular level (as might be done for example when testing for fiber continuity). Alternatively the detection means can provide a quantitative measure of the intensity of any withdrawn signal; in this case the intensity of the withdrawn signal can be used to modify another variable. The withdrawn signal can be fed directly into a detection means adjacent the coupling means. Alternatively the withdrawn signal can be fed into a second optical fiber and the detection means can be placed at the other end of the second optical fiber. The detection means can be a piece of telecommunication apparatus, e.g. a telephone or a computer. The smaller the radius of the
bend in the fiber, the greater the proportion of the
signal which is withdrawn from the fiber in the vicinity
of the coupling means. In this way it is possible to
remove a desired proportion of an optical signal from
an optical fiber. The coupling means and the radius
of the bend in the fiber are preferably correlated so
that at least 0.5%, for example at least 1% or at least
2%, but not more than 4% and usually not more than
3%, of any optical signal is withdrawn. The bend
radius is usually in the range of 3 to 15mm, preferably
4 to 8mm.

In another aspect, the invention provides a
method of feeding an optical signal into an optical
fiber as defined which method comprises (1) generating
an optical signal; (2) directing the optical signal at
a portion of the fiber which is contacted by a coupling
means which (a) conforms to the surface of the buffer
of the fiber, (b) lies in the path of the optical
signal directed at the fiber and (c) increases the
proportion of the optical signal which passes through
the buffer of the fiber. The coupling means, which is
preferably as described above, preferably contacts a
bent portion of the fiber, the bend radius being
preferably from 3 to 15mm,, particularly 4 to 8mm, and
the angle between the signal and the tangent to the
fiber at the point of signal impact being preferably
not more than 20°, particularly not more than 10°,
especially substantially 0°.

    In another aspect, the invention provides apparatus
comprising (1) an optical fiber as defined and (2) an
optical coupling means which contacts and conforms to
the surface of the buffer of the fiber.  The coupling
means preferably contacts a bent portion of the fiber,
the bend radius being preferably from 3 to 15mm,
particularly 4 to 8mm.  The apparatus can also comprise
(a) means for generating an optical signal and directing
the signal at the fiber through the coupling means or
(b) means for detecting an optical signal withdrawn
from the fiber via the coupling means.

    The invention is illustrated by the accompanying
drawing, in which the Figure is a diagrammatic view of
apparatus according to the invention for aligning and
joining two optical fibers.

    Referring now to the Figure, a first optical fiber
30 having an end 32 is maintained in a desired configuration by a first adjustable holding means 10 and a
first bending means 11 which maintains a bent portion
31 in the fiber.  First optical coupling means 28
contacts the bent portion 31 of the first fiber.  A
second optical fiber 42 having an end 40 is maintained
in a desired configuration by a second adjustable
holding means 12 and a second bending means 13 which
maintains a bent portion 41 in the fiber.  Second
optical coupling means 34 contacts the bent portion 41
of the second fiber.  The ends (38, 40) of the first
and second fibers lie within a tube 18 which contains a
UV-curable index-matching adhesive 19 and which is held
in position by tubeholder 16.  Signal-generating means
24 generates an optical signal which passes through a
focusing means such as lens 26 and the first coupling

-16-

means 28 before striking the buffer of the bent portion
31 of the first fiber 30. The optical signal enters
the first fiber 30 and then passes through the second
fiber 40 until it reaches the bent portion 41, where a
portion of the signal is withdrawn through second
coupling means 34 and passes _via_ focusing means such as
lens 36 to a detector 38. The signal received by
detector 38 can be displayed on a meter 44 and/or can
be fed to a servomechanism 46 which is linked to the
adjustable holding means 10 and 12 and by means of
which the holding means 10 and 12 are automatically
adjusted relative to each other in order to maximize
the detected signal, thus providing for alignment of
the fibers without calling for high skill from the
operator. The detector 38 and the signal generator 24
are preferably linked to each other so that the intensity
of the generated signal is automatically adjusted to a
level at which the detected signal lies in the range of
maximum sensitivity of the detector and preferably also
so that the detector ignores unwanted variations in the
intensity of the generated signal. The apparatus also
comprises a UV light source 20 and an associated
focusing means such as lens 22. When the fiber ends 32
and 40 have been precisely aligned, the UV light source
is switched on for a time sufficient to cure the
adhesive 19.

-17-

The invention is further illustrated by the following Example.

## EXAMPLE

An automated apparatus as illustrated in the Figure was used to splice two identical optical fibers. The fibers (which are available from Corning Glass under the trade designation Glass Code 1516) consisted of a glass core of diameter 50 microns, a glass cladding of outer diameter 125 microns and a polyacrylate buffer of outer diameter 250 microns. The buffer was stripped from the fiber ends and the stripped fiber ends were cleaved to provide clean end surfaces about 3mm from the end of the buffer. Each of the fibers was then secured in the desired configuration by the holding and bending means. Each of the holding means comprised two plates facing each other, one of the plates containing a groove in which the fiber was placed. Each of the bending means comprised a round post having a radius of about 5mm and containing a circumferential groove in which the fiber was placed. Each of the coupling means was a rectangular block of a poly(dimethyl siloxane) have a refractive index of about 1.41 and a Shore A hardness of about 45 (this material is available in its uncured state from General Electric under the trade designation RTV 108 or RTV 615). The signal generator was a high intensity infrared light-emitting diode having a peak at about 840 nm (available from RCA under the trade designation SG1010) with associated electronics, and the signal was directed approximately tangentially towards the bent portion of the first fiber through the first coupling means.

-18-


The detector was an infrared-sensitive PIN diode
(available from Hewlett Packard under the trade designation 4707-8134) with associated electronics, and was
positioned to receive a signal leaving tangentially
from the bent portion of the second fiber through the
second coupling means.  The signal generator and
detector were linked in the preferred way described
above, and the detector was linked to a servomechanism
which automatically moved the holding means so as to
maximise the signal received by the detector.  The
servomechanism comprised a microprocessor (available
from Intel under the trade designation 8085) with
associated memory, interfaces and power supply.  The
tubeholder held a quartz glass tube (inner diameter
1000 microns, outer diameter 2000 microns and length
about 1.3 cm) which contained a UV-polymerisable
adhesive having a refractive index (when cured) of
about 1.54.  The adhesive comprised about equal parts
by weight of a urethane/acrylate oligomer (available
from Polymer Systems under the trade designation
Purelast 186) and isobornyl acrylate, and a small
quantity of a photo-initiator.

    The two holding means were first widely separated
so that the adhesive-filled tube could be placed
between the fiber ends.  The holding means were then
moved so that the fibers were pushed into the adhesive-
filled tube until the fiber ends were almost touching
in the center of the tube.  The fibers were then
precisely aligned.  When alignment was complete, the
ultraviolet light was turned on to polymerise the
adhesive.

    An excellent splice was obtained.

-19-

Although the invention has been described with reference of optical fibers comprising a core, cladding and buffer, it will be apparent that in many of its aspects it is also applicable, with suitable modifications, to other optical fibers, including plastic-clad silica (PCS) or all plastic fibers.

<u>CLAIMS</u>

1.   Apparatus for aligning the ends of first and
second optical fibers, each fiber comprising a core, a
cladding and a buffer, which apparatus comprises means
for positioning the ends of the fibers in axially
aligned and abutting relationship, characterized in
that the apparatus comprises:

(1)   first holding means for holding a first
      fiber near the end thereof;

(2)   means for generating an optical signal and
      for directing the signal against the buffer
      of a first fiber held in the first holding
      means so that the signal passes through the
      buffer of the first fiber towards the end of
      the fiber;

(3)   second holding means for holding a second fiber
      near the end thereof, in a position in which
      the end of the second fiber is approximately
      abutting and axially aligned with the end of
      a first fiber held by the first holding means;
      and

(4)   means for withdrawing an optical signal from
      a second fiber held in the second holding
      means, through the buffer of the second
      fiber, and for detecting the intensity of the
      withdrawn signal;

      at least one of the first and second holding means
      being movable in relation to the other so as to
      maximize the optical signal detected by the means
      (4) and thus precisely axially align the cores of
      the first and second fibers.

-21-

2.   Apparatus according to claim 1 characterized by
comprising

    (5)   first bending means for maintaining a bend
         in a first fiber held by the first holding
         means, with the optical signal being directed
         against the bent portion of the first fiber;
         and

    (6)   second bending means for maintaining a bend
         in a second fiber held by the second holding
         means, with the optical signal being withdrawn
         from the bent portion of the second fiber;

the bent portions of the first and second fibers preferably
having a bend radius of 3 to 15 mm.

3.   Apparatus according to claim 1 or 2 characterized
by comprising

    (7)   means for applying, to a first fiber held by
         the first holding means, a first coupling
         means which (a) will conform to the surface
         of the buffer of the first fiber, (b) will
         lie in the path of an optical signal generated
         by the means (2), and (c) will increase the
         proportion of an optical signal, generated by
         the generating means (2), which passes
         through the buffer of the first fiber;
         and

(8) means for applying, to a second fiber held by the second holding means, a second coupling means which (a) will conform to the surface of the buffer of the second fiber and (b), when an optical signal is passing through the second fiber, will increase the proportion of the optical signal which is withdrawn from the second fiber and detected by the means (4),

each of said coupling means preferably being a member composed of a resiliently deformable material, particularly a polysiloxane.

4. Apparatus according to any one of claims 1 to 3 characterised by comprising

(9) means for holding a tube which contains index-matching adhesive, which has an internal diameter substantially larger than the external diameter of the buffers of the fibers, and within which the ends of the first and second fibers can be aligned; and

(10) means for hardening an index-matching adhesive delivered to the ends of first and second fibers in said tube, preferably a high intensity UV source.

5. Apparatus according to any one of the preceding claims characterized by comprising

(11) a servomechanism which is adapted to move at least one of the first and second holding means in response to the intensity of the withdrawn optical signal.

0063954
MP0766

-23-

6. A method of axially aligning the ends of first and second optical fibers, each fiber comprising a core, a cladding and a buffer, by positioning the ends of the fibers in approximately abutting and axially aligned relationship; feeding an optical signal into the first fiber; detecting that optical signal in the second fiber; and moving at least one of the fibers to maximize the intensity of the detected optical signal; characterised in that the optical signal is directed against the buffer of the first fiber at a location near the end to be aligned so that the signal passes through the buffer towards the end to be aligned, and the optical signal is withdrawn from the second fiber through the buffer thereof at a location near the end to be aligned.

7. A method according to claim 6 characterized in that a bend is made in the first fiber near the end to be joined and the optical signal is directed at the bent portion of the first fiber, the bend radius of the bent portion of the fiber preferably being 3 to 15mm and the angle between the optical signal and the tangent to the fiber at the point of signal impact preferably being at most 20°.

8. A method according to Claim 6 or 7 characterized in that a bend is made in the second fiber near the end to be joined and the optical signal is withdrawn from the bent portion of the second fiber, the bend radius of the bent portion of the second fiber preferably being 3 to 15mm.

-24-

9. A method according to any one of claims 6 to 8 characterized by (1) applying to the first fiber a first coupling means which (a) conforms to the surface of the buffer of the first fiber, (b) lies in the path of the optical signal directed at the first fiber and (c) increases the proportion of the optical signal which passes through the buffer of the first fiber, and (2) applying to the second fiber a second coupling means which (a) conforms to the surface of the buffer of the second fiber and (b) increases the proportion of the optical signal which is withdrawn and detected; said coupling means preferably comprising a resiliently deformable material, particularly a polysiloxane.

10. A method according to any one of claims 6 to 9 characterized by joining the aligned fibers together.

11. A method according to claim 10 characterized in that the fibers are moved into axial alignment within a generally tubular container which contains a fluid index-matching adhesive and which has an internal diameter substantially larger than, preferably 3 to 6 times, the external diameter of the buffers of the fibers, and the adhesive is then hardened.

0063954
MP0766

-25-

12. A splice between two axially aligned optical fibers which are joined together by an index-matching adhesive, each of said fibers comprising a core, a cladding and a buffer, characterized in that the splice is surrounded by a generally tubular, straight container which contains the index-matching adhesive, whose smallest internal cross-sectional dimension is at least 300 microns and which does not contact the fibers at any point, the end of each buffer preferably lying within the mass of index-matching adhesive, and the internal diameter of the container preferably being 3 to 6 times the outer diameter of the buffer.

13. A method of detecting an optical signal in an optical fiber comprising a core, a cladding and a buffer, characterized by

    (1)  applying to a bent portion of the fiber a coupling means which (a) conforms to the surface of the buffer of the fiber and (b), when an optical signal is passing through the fiber, increases the proportion of the signal which is withdrawn through the buffer of the fiber, the coupling means preferably comprising a resiliently deformable material; and

    (2)  passing any withdrawn optical signal through a detection means.

14. A method according to claim 13 characterized in that the withdrawn signal is fed into a second optical fiber and the detection means is at the remote end of the second optical fiber, and preferably further characterized in that (a) the radius of the bend in the fiber and (b) the coupling means are correlated so that 0.5% to 4% of any optical signal passing through the fiber is withdrawn.

15. A method of feeding an optical signal into an optical fiber comprising a core, a cladding and a buffer, characterized by directing the optical signal at a portion of the fiber which is contacted by a coupling means which (a) conforms to the surface of the buffer of the fiber, (b) lies in the path of the optical signal directed at the fiber and (c) increases the proportion of the optical signal which passes through the buffer of the fiber, the coupling means preferably being composed of a resiliently deformable material and contacting a bent portion of the fiber, the bend radius of the bent portion preferably being 3 to 15mm, and the angle between the signal and the tangent to the fiber at the point of signal impact preferably being at most 20°.

16. Apparatus comprising an optical fiber comprising a core, a cladding and a buffer, characterized by comprising an optical coupling means which contacts and conforms to the surface of the buffer of the fiber, the coupling means preferably comprising a resiliently deformable material and contacting a bent portion of the fiber, the bend radius of the bent portion preferably being 3 to 15mm.

17. An article which is suitable for use in splicing two optical fibers and which comprises a generally tubular, straight container having two open ends and and containing a hardenable index-matching adhesive, characterized in that (1) the smallest internal cross-sectional dimension of the container is at least 300 microns, preferably at least 750 microns, particularly 750 to 1500 microns, and (2) the hardenable adhesive is the sole material within the container and is retained in the container by surface tension forces when the tube is maintained in a horizontal position at 23°C.

| Category | Citation of document with indication, where appropriate, of relevant passages | Relevant to claim | CLASSIFICATION OF THE APPLICATION (Int. Cl. ³) |
|---|---|---|---|
| P,A | <u>EP - A1 - 0 030 108</u> (POST OFFICE)<br>* page 3, lines 16 to 33 *<br>-- | 1,5,<br>6,10 | G 02 B 7/26 |
| A | <u>GB - A - 2 040 495</u> (ITT INDUSTRIES INC.)<br>* page 1, line 120 to page 2, line 19;<br>page 4, lines 95 to 113 *<br>-- | 1,6 | |
| A | <u>DE - A1 - 2 626 839</u> (SIEMENS AG)<br>* page 4, paragraph 5 to page 5,<br>paragraph 1; page 7, paragraph 3 *<br>-- | 2,3,<br>6,13 | **TECHNICAL FIELDS SEARCHED (Int.Cl. ³)** |
| A | <u>CA- A - 1 068 953</u> (NORTHERN TELECOM<br>LTD.)<br>* page 2, line 26 to page 3, line 11 *<br>---- | 4,5,<br>11 | G 01 B 11/26<br><br>G 01 B 11/27<br><br>G 01 M 11/00<br><br>G 02 B 5/14<br><br>G 02 B 7/26 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 29-06-1982 | BOTTERILL |

EPO Form 1503.1 06.78